(19) Europäisches Patentamt
European Patent Office
Office européen des brevets

(11) **EP 2 668 059 B1**

(12) **FASCICULE DE BREVET EUROPEEN**

(45) Date de publication et mention
de la délivrance du brevet:
**30.03.2016 Bulletin 2016/13**

(21) Numéro de dépôt: **12704880.9**

(22) Date de dépôt: **20.01.2012**

(51) Int Cl.:
**B60L 7/26** *(2006.01)*    **B60L 7/18** *(2006.01)*
**B60L 15/20** *(2006.01)*

(86) Numéro de dépôt international:
**PCT/FR2012/050120**

(87) Numéro de publication internationale:
**WO 2012/101360 (02.08.2012 Gazette 2012/31)**

(54) **PROCEDE DE PILOTAGE D'UN MOYEN DE RECUPERATION DE L'ENERGIE GENEREE AU FREINAGE D'UN VEHICULE AUTOMOBILE**

VERFAHREN ZUR STEUERUNG EINES MITTELS ZUR WIEDERGEWINNUNG DER DURCH DAS BREMSEN EINES KRAFTFAHRZEUGS ERZEUGTEN ENERGIE

METHOD FOR CONTROLLING A MEANS FOR RECOVERING ENERGY GENERATED BY THE BRAKING OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.01.2011 FR 1100216**

(43) Date de publication de la demande:
**04.12.2013 Bulletin 2013/49**

(73) Titulaire: **Renault S.A.S.**
**92100 Boulogne-Billancourt (FR)**

(72) Inventeurs:
• **AZZI, Hamid**
  **F-78310 Maurepas (FR)**
• **LUCEA, Marc**
  **F-92100 Boulogne Billancourt (FR)**
• **PITA-GIL, Guillermo**
  **75014 Paris (FR)**

(56) Documents cités:
**EP-A2- 1 555 184    FR-A1- 2 926 771
JP-A- 58 003 502**

## Description

DOMAINE TECHNIQUE AUQUEL SE RAPPORTE L'INVENTION

La présente invention concerne de manière générale le pilotage des organes de freinage d'un véhicule automobile.

Elle s'applique aux véhicules automobiles comportant des roues motrices, des freins, un moyen de récupération de l'énergie générée au freinage du véhicule automobile, et une chaîne de transmission de couple depuis les roues motrices vers le moyen de récupération.

Elle concerne plus particulièrement un procédé de pilotage d'un tel véhicule automobile, qui comprend des étapes :

> a) d'acquisition d'une instruction de freinage et de caractéristiques dynamiques du véhicule automobile (vitesse, accélération, vitesse angulaire des roues, régime-moteur...),
> b) de pilotage dudit moyen de récupération suivant une consigne de pilotage calculée en fonction de l'instruction de freinage et des caractéristiques dynamiques acquises à l'étape a), et
> c) de pilotage des freins suivant une consigne de pilotage calculée en fonction de l'instruction de freinage et des caractéristiques dynamiques acquises à l'étape a).

ARRIERE-PLAN TECHNOLOGIQUE

Dans les véhicules automobiles du type précité, le moyen de récupération est prévu en complément des freins. Il permet ainsi non seulement de freiner le véhicule, mais aussi d'emmagasiner une partie de l'énergie générée par le freinage du véhicule en vue de la réutiliser par la suite.

Ce moyen de récupération permet ainsi de réduire la consommation énergétique du véhicule ainsi que l'usure des plaquettes de frein.

Au freinage, on observe malheureusement sur ce type de véhicules des phénomènes d'oscillation du couple transmis aux roues motrices, ce qui génère des à-coups affectant le confort des passagers du véhicule et l'usure des éléments de la chaîne de traction du véhicule.

Ces oscillations proviennent de la chaîne de transmission de couple qui, parce que chacun de ses organes présente une rigidité et un amortissement non nuls, se déforme (en torsion, flexion, traction, compression) avec une amplitude et une fréquence qui varient en fonction du couple transmis et du vieillissement des différents composants. Le document FR2926771 décrit un procédé selon le préambule de la revendication 1.

OBJET DE L'INVENTION

Afin de réduire les à-coups affectant le confort des passagers du véhicule, la présente invention propose de filtrer (au sens large) l'instruction de freinage émise par le conducteur.

Plus particulièrement, on propose selon l'invention un procédé de pilotage tel que défini dans l'introduction, dans lequel, à l'étape b), la consigne de pilotage dudit moyen de récupération est calculée au moyen d'un filtre préventif qui filtre ladite instruction de freinage de manière à atténuer son amplitude, en particulier autour de la fréquence de résonance de la chaîne de transmission de couple.

Lorsque l'on étudie le comportement fréquentiel de la chaîne de transmission de couple, on observe que cette chaîne de transmission de couple présente une fréquence principale de résonance qui est à l'origine des à-coups.

Grâce à l'invention, la consigne de pilotage du moyen de récupération est alors calculée de telle sorte que la chaîne de transmission de couple ne soit pas ou peu excitée dans des fréquences proches de cette fréquence de résonance.

Les à-coups ressentis par les passagers au freinage du véhicule sont ainsi fortement réduits.

D'autres caractéristiques avantageuses et non limitatives du procédé de pilotage conforme à l'invention sont les suivantes :

- à l'étape a), on acquiert la valeur d'un paramètre de sortie dudit moyen de récupération, et, à l'étape b), la consigne de pilotage de ce moyen de récupération est calculée au moyen d'un filtre curatif qui filtre ledit paramètre de sortie de manière à amortir les oscillations de la chaîne de transmission de couple ;
- le moyen de récupération étant constitué par un moteur électrique, ledit paramètre de sortie est constitué par le régime du moteur électrique ;
- le filtre curatif est de la forme

$$\frac{K\,s^2(1+\tau_1 s)}{(1+\tau_2 s)^2(1+\tau_2 s)} \; ;$$

- le filtre préventif est un filtre passe-bas ;
- le filtre préventif est un filtre de saturation du signal ;
- à l'étape c), la consigne de pilotage des freins est déduite de la différence entre l'instruction de freinage et la consigne de pilotage du moyen de récupération ;
- à l'étape a), l'instruction de freinage est déterminée en fonction de la position de la pédale de frein du véhicule automobile ou de l'effort appliqué sur cette pédale de frein ou de la dérivée de la position de la pédale de frein ou de la dérivée de l'effort appliqué sur cette pédale de frein.

Elle concerne également un véhicule automobile tel que défini dans l'introduction, qui comporte une unité de pilotage programmée pour mettre en oeuvre un procédé de pilotage tel que précité.

Avantageusement alors, ledit moyen de récupération est constitué par un moteur électrique.

DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :

- la figure 1 est une vue schématique du véhicule automobile selon l'invention ;
- la figure 2 est un schéma illustrant le système de commande des freins et du moyen de récupération d'énergie du véhicule automobile de la figure 1 ;
- la figure 3 est un schéma illustrant le filtre préventif du système de commande de la figure 2 ;
- la figure 4 est un schéma illustrant le filtre curatif du système de commande de la figure 2 ;
- la figure 5 est une courbe représentant les variations de l'accélération du véhicule automobile dans le temps, après que le conducteur a commandé le freinage du véhicule, lorsque le système de commande est dépourvu de filtre ;
- la figure 6 est une courbe représentant les variations de l'accélération du véhicule automobile dans le temps, après que le conducteur a commandé le freinage du véhicule, lorsque le système de commande est équipé d'un filtre préventif passe-bas et d'un filtre curatif ;
- la figure 7 est une courbe représentant les variations de la consigne de pilotage des freins, dans les mêmes conditions que celles énoncées pour la figure 6 ;
- la figure 8 est une courbe représentant les variations de l'une des deux composantes de la consigne de pilotage du moyen de récupération, celle issue du filtre curatif, dans les mêmes conditions que celles énoncées pour la figure 6 ; et
- la figure 9 est une courbe représentant les variations de l'accélération du véhicule automobile dans le temps, dans les mêmes conditions que celles énoncées pour la figure 6, mais en simulant un retard de 20 ms dans le système de commande ;
- la figure 10 est une courbe représentant les variations de l'accélération du véhicule automobile dans le temps après que le conducteur a commandé le freinage du véhicule, lorsque le système de commande est équipé d'un unique filtre qui est un filtre préventif passe-bas ;
- la figure 11 est une courbe représentant les variations de la consigne de pilotage des freins, dans les mêmes conditions que celles énoncées pour la figure 10 ;
- la figure 12 est une courbe représentant les variations de l'accélération du véhicule automobile dans le temps après que le conducteur a commandé le freinage du véhicule, lorsque le système de commande est équipé d'un unique filtre qui est un filtre préventif de saturation ;
- la figure 13 est une courbe représentant les variations de la consigne de pilotage des freins, dans les mêmes conditions que celles énoncées pour la figure 12.

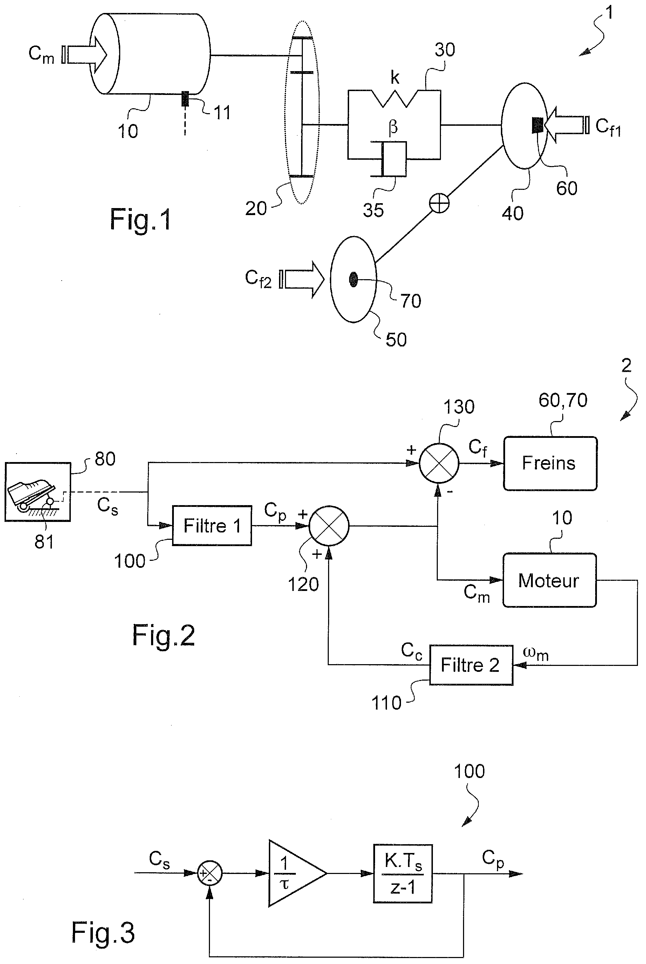

Sur la figure 1, on a représenté très schématiquement un véhicule automobile 1.

Ce véhicule automobile comporte classiquement deux roues motrices 40 (illustrées sur la figure 1 par un unique cercle) et deux roues non-motrices 50 (illustrées sur la figure 1 par un autre cercle).

Ce véhicule automobile 1 est ici un véhicule électrique. Il comporte donc une batterie d'accumulateurs (non représentée), un moteur électrique 10 alimenté par cette batterie d'accumulateurs et une chaîne de transmission 20 du couple depuis le moteur 10 vers les roues motrices 40, qui comprend en particulier un mécanisme de pignonnerie.

Comme cela est illustré de manière schématique sur la figure 1, cette chaîne de transmission 20 présente une élasticité non nulle pouvant être modélisée par un ressort 30 de rigidité notée k et par un piston 35 d'amortissement noté β.

Cette chaîne de transmission 20 est ainsi susceptible de se déformer (en torsion, flexion, traction, compression) et d'osciller avec une fréquence et une amplitude qui varient en fonction du couple transmis depuis le moteur électrique 10 vers les roues motrices 40 ou depuis les roues motrices 40 vers le moteur électrique 10. Après étude de cette chaîne de transmission, on observe qu'elle présente un mode propre auquel elle est susceptible d'osciller fortement, à une fréquence appelée fréquence de résonance.

Le véhicule automobile 10 comporte par ailleurs deux types de moyens de freinage, des moyens de freinage dissipatifs et un moyen de freinage récupératif (également appelé « moyen de récupération d'énergie »).

Les moyens de freinage dissipatifs sont ici des freins à disque 60, 70 qui équipent les trains de roues motrices 40 et non-motrices 50. En variante, il pourrait bien entendu s'agir de freins à tambour.

Le moyen de freinage récupératif est ici formé par le moteur électrique 10 lui-même, qui présente alors une fonction d'alternateur en ce sens qu'il est adapté à freiner les roues motrices 40 lorsque le véhicule avance et à transformer l'énergie cinétique du véhicule en une énergie électrique alimentant la batterie d'accumulateurs.

Pour piloter ses différents organes, le véhicule automobile 1 comporte un calculateur comprenant un processeur (CPU), une mémoire vive (RAM), une mémoire morte (ROM) et différentes interfaces d'entrée et de sortie.

Grâce à ses interfaces d'entrée, le calculateur est adapté à recevoir des signaux d'entrée provenant de différents capteurs 11, 81. Il est en particulier adapté à acquérir la vitesse de rotation $\omega_m$ du moteur électrique 10 au moyen d'un capteur de vitesse 11 ainsi que la position et la pression de la pédale de frein 80 (figure 2) au moyen d'un capteur 81.

Grâce à un logiciel 2 installé dans sa mémoire morte et illustré schématiquement sur la figure 2, le calculateur est adapté à calculer, pour chaque condition de fonctionnement du véhicule automobile 1, des consignes de pilotage du moteur électrique 10 et des freins 60, 70.

Enfin, grâce à ses interfaces de sortie, le calculateur est adapté à transmettre ces consignes de pilotage au moteur électrique 10 et aux freins 60, 70.

Le calculateur est adapté, lorsque le conducteur appuie sur la pédale de frein 80, à mettre en oeuvre un procédé de pilotage du moteur électrique 10 et des freins 60, 70 qui se décompose en six opérations principales illustrées sur la figure 2.

La première opération est une opération d'acquisition de données.

Au cours de cette opération, le calculateur acquiert la position instantanée de la pédale de frein 80, la pression instantanée exercée sur elle, et la vitesse de rotation $\omega_m$ instantanée du moteur électrique 10.

La seconde opération est une opération de détermination de l'intensité avec laquelle le conducteur souhaite freiner le véhicule automobile 1.

Au cours de cette opération, le calculateur déduit de la position de la pédale de frein 80 et de la pression exercée sur elle, la valeur du couple de freinage souhaité Cs par le conducteur.

Ce couple de freinage souhaité Cs correspond donc à la somme des couples de freinage à appliquer aux roues motrices 40 et non-motrices 50 du véhicule automobile 1 au moyen des freins 60, 70 et du moteur électrique 10.

La troisième opération, qui est au coeur de la présente invention, est une opération de filtrage de ce couple de freinage souhaité Cs.

Au cours de cette opération, le calculateur calcule la valeur d'un premier couple intermédiaire Cp, grâce à un filtre préventif 100 qui filtre le couple de freinage souhaité Cs de manière à atténuer son amplitude autour de la fréquence de résonance de la chaîne de transmission de couple 20.

Ce filtre préventif 100 permet ainsi de filtrer la consigne de commande du moteur électrique 10, de manière à éviter que ce dernier n'excite trop le mode propre de la chaîne de transmission de couple 20.

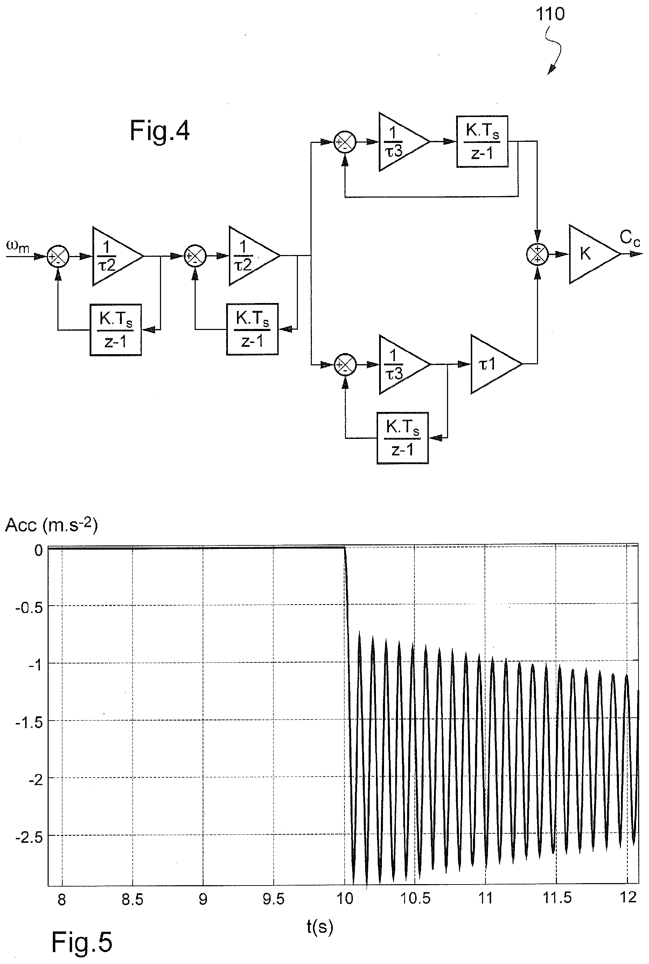

Sur la figure 5, on a représenté les variations de l'accélération longitudinale que présenterait le véhicule automobile 1 en l'absence d'un tel filtrage, si le conducteur appuyait subitement sur le frein et le maintenait enfoncé.

On observe sur cette figure que l'accélération longitudinale du véhicule oscillerait fortement et sur une longue durée, ce qui générerait des à-coups affectant le confort des passagers du véhicule.

L'intérêt de ce filtre préventif 100 est donc de réduire l'apparition de telles oscillations.

Tel que représenté sur la figure 3, ce filtre préventif 100 est un filtre passe-bas dont la pulsation de coupure (égale à $1/\tau$) est choisie en fonction de la fréquence principale de résonance de la chaîne de transmission de couple 20.

La quatrième opération, qui améliore sensiblement le fonctionnement de la présente invention, est une opération d'amortissement des oscillations de la chaîne de transmission de couple 20. Elle est réalisée en mesurant la vitesse de rotation $\omega_m$ instantanée du moteur électrique 10 et en pilotant ce moteur électrique 10 en fonction des variations de cette vitesse de rotation $\omega_m$. Cette opération pourrait également prendre en compte la vitesse de rotation des roues.

Au cours de cette opération, le calculateur calcule la valeur d'un second couple intermédiaire Cc, grâce à un filtre curatif 110 qui filtre les variations de la vitesse de rotation $\omega_m$ du moteur électrique 10 de manière à tenir compte, « en temps réel », du comportement de ce moteur électrique 10 afin d'amortir au mieux les oscillations de la chaîne de transmission de couple 20.

Comme le montre la figure 4, ce filtre curatif 110 est ici de la forme $\dfrac{K s^2 (1 + \tau_1 s)}{(1 + \tau_2 s)^2 (1 + \tau_2 s)}$ .

Ce filtre curatif 110 comporte ainsi une double dérivée. De cette manière, lorsque l'appui sur la pédale de frein 80 est maintenu, le freinage initialement assuré par les freins 60, 70 est rapidement basculé vers le moteur électrique 10, qui assure alors à lui seul le freinage du véhicule automobile 1. Il est ainsi possible de récupérer une quantité d'énergie électrique maximum, dans la mesure bien entendu de la capacité du moteur électrique 10 à freiner le véhicule.

Ce filtre curatif 110 comporte aussi un couple de « pôle-zéro ». De cette manière, le système de commande est peu sensible aux retards éventuels qui pourraient provenir d'un décalage entre le moment où la position de la pédale de frein 80 et la vitesse de rotation $\omega_m$ du moteur électrique 10 sont mesurées et le moment où le moteur électrique 10 est piloté en fonction de ces données mesurées.

La cinquième opération est une opération d'élaboration d'une consigne de pilotage Cm du moteur électrique 10.

Cette opération est réalisée à l'aide d'un sommateur 120 qui calcule la somme des deux couples intermédiaires Cc, Cp, ce qui fournit le couple de consigne de pilotage Cm du moteur électrique 10.

La sixième opération est une opération d'élaboration d'une consigne de pilotage Cf des freins 60, 70.

Cette opération est réalisée à l'aide d'un soustracteur 130 qui calcule la différence entre le couple de freinage souhaité Cs et le couple de consigne de pilotage Cm du moteur électrique 10, ce qui fournit le couple de consigne de pilotage Cf des freins 60, 70.

Ce calcul permet ainsi de piloter les freins de telle manière qu'ils prennent en charge la partie du couple de freinage qui ne peut pas être assumée par le moteur électrique 10.

Le couple de consigne de pilotage Cf est alors réparti entre les freins 60, 70 des deux trains de roues motrices 40 et non-motrices 50 suivant une répartition prédéterminée, de la forme :

$$Cf = a.Cf1 + (1-a).Cf2, \text{ avec}$$

avec

a : une constante prédéterminée,
Cf1 : la partie du couple de consigne de pilotage Cf transmise aux freins 60 des roues motrices 40, et
Cf2 : la partie du couple de consigne de pilotage Cf transmise aux freins 70 des roues non-motrices 50.

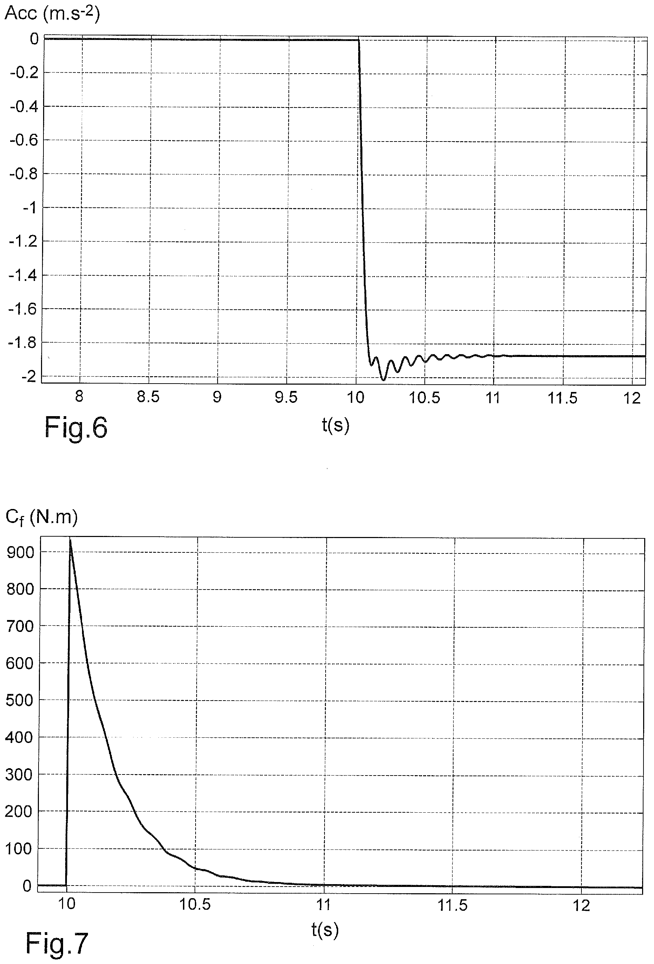

Sur les figures 6 à 9, on a illustré les résultats obtenus lorsque le conducteur appuie subitement sur le frein et le maintient appuyé.

Sur la figure 6, on a représenté les variations de l'accélération longitudinale du véhicule automobile.

Par rapport à la figure 5, on observe sur cette figure 6 que les oscillations de l'accélération longitudinale du véhicule présentent non seulement une amplitude réduite, mais qu'elles sont également mieux amorties dans le temps.

Sur la figure 7, on a représenté les variations du couple de consigne de pilotage Cf des freins 60, 70.

On observe que le couple de consigne se réduit très rapidement et s'annule en environ 1 seconde, de sorte que le moteur électrique 10 assume très rapidement à lui seul le freinage du véhicule automobile. La quantité d'énergie électrique récupérée est ainsi maximisée.

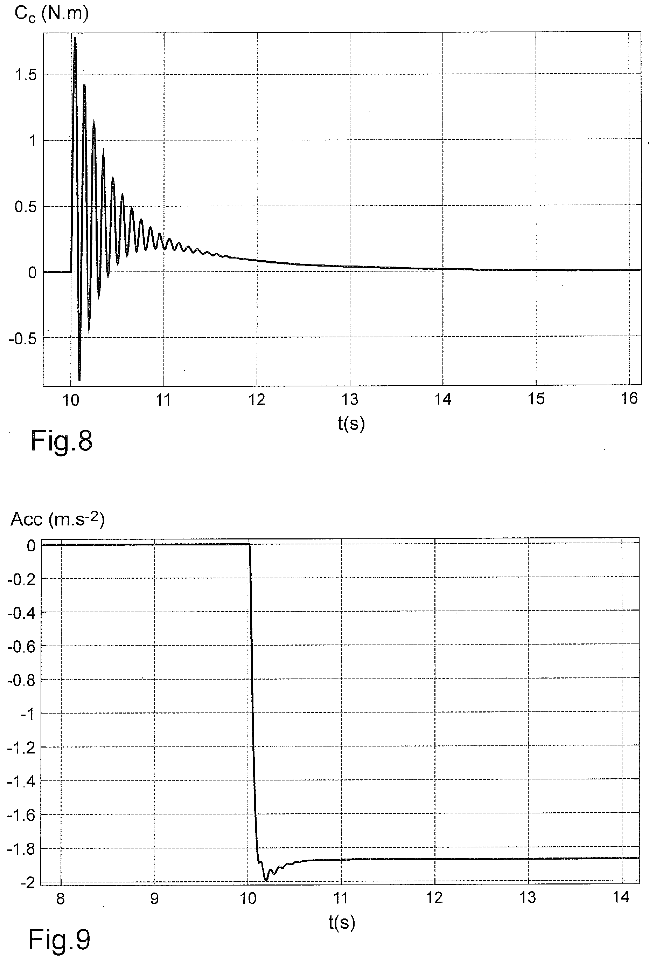

Sur la figure 8, on a représenté les variations du second couple intermédiaire Cc.

On observe ainsi que la composante du couple de consigne de pilotage Cm du moteur électrique 10, qui correspond à ce second couple intermédiaire Cc, est calculée grâce au filtre curatif 110 pour osciller en opposition de phase par rapport aux oscillations naturellement générées par le moteur électrique 10 sur la chaîne de transmission de couple 20.

Sur la figure 9, on a représenté les variations de l'accélération longitudinale du véhicule automobile, en prenant en compte un retard de 20 ms entre le moment où la position de la pédale de frein 80 et la vitesse de rotation $\omega_m$ du moteur électrique 10 sont mesurées et le moment où le moteur électrique 10 est piloté en fonction de ces données mesurées.

On constate sur cette figure que ce retard ne modifie sensiblement ni l'amplitude des oscillations de l'accélération longitudinale du véhicule automobile, ni leur amortissement.

La présente invention n'est nullement limitée au mode de réalisation décrit et représenté, mais l'homme du métier saura y apporter toute variante conforme à son esprit.

Dans une première variante, on pourra prévoir que le système de commande du moteur électrique 10 et des freins 60, 70 soit dépourvu de filtre curatif, auquel cas le couple de freinage souhaité Cs ne sera filtré que par le filtre préventif 110 avant d'être transmis au moteur électrique 10. Le moteur électrique 10 sera donc commandé suivant une consigne de pilotage égale au premier couple intermédiaire Cp.

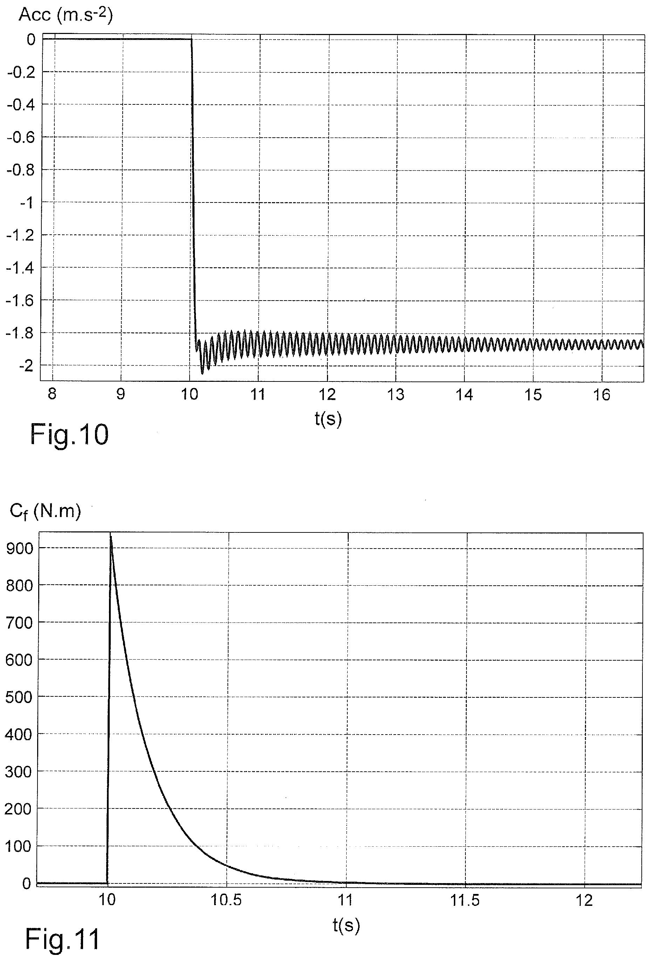

Sur les figures 10 et 11, on a illustré les résultats obtenus avec un tel système de commande lorsque le conducteur appuie subitement sur le frein 80 et le maintient appuyé.

Sur la figure 10, on a représenté les variations de l'accélération longitudinale du véhicule automobile.

Par rapport à la figure 6, on observe sur cette figure 10 que les oscillations de l'accélération longitudinale du véhicule conservent une amplitude réduite. En l'absence de filtre curatif 120, elles sont toutefois moins bien amorties.

Sur la figure 11, on a représenté les variations du couple de consigne de pilotage Cf des freins 60, 70.

On observe qu'ici aussi le couple de consigne Cf se réduit très rapidement et s'annule en environ 1 seconde, de sorte que le moteur électrique 10 assume très rapidement à lui seul le freinage du véhicule automobile 1.

En résumé, l'utilisation d'un unique filtre (préventif) permet de réduire l'intensité des à-coups ressentis par les passagers du véhicule automobile 1 et d'optimiser l'utilisation du moteur électrique 10 pour freiner le véhicule. Elle ne permet toutefois pas d'amortir très rapidement ces à-coups.

Par ailleurs, l'inconvénient majeur de cette solution est qu'elle nécessite d'utiliser pour le filtre passe-bas une fréquence de coupure très faible par rapport à la fréquence de résonance (plus faible que si le système de commande avait un filtre curatif), ce qui réduit d'autant l'efficacité de l'amortissement des oscillations.

Dans une seconde variante, on pourra prévoir que le système de commande du moteur électrique 10 et des freins 60, 70 soit dépourvu de filtre curatif, et que son filtre préventif soit non plus un filtre passe-bas mais un filtre dit de limitation de la dérivée du signal.

Un tel filtre (non représenté) permet de limiter la valeur des variations de fréquence de l'instruction de freinage Cs lorsque cette fréquence dépasse un seuil maximum prédéterminé et/ou passe sous un seuil minimum prédéterminé.

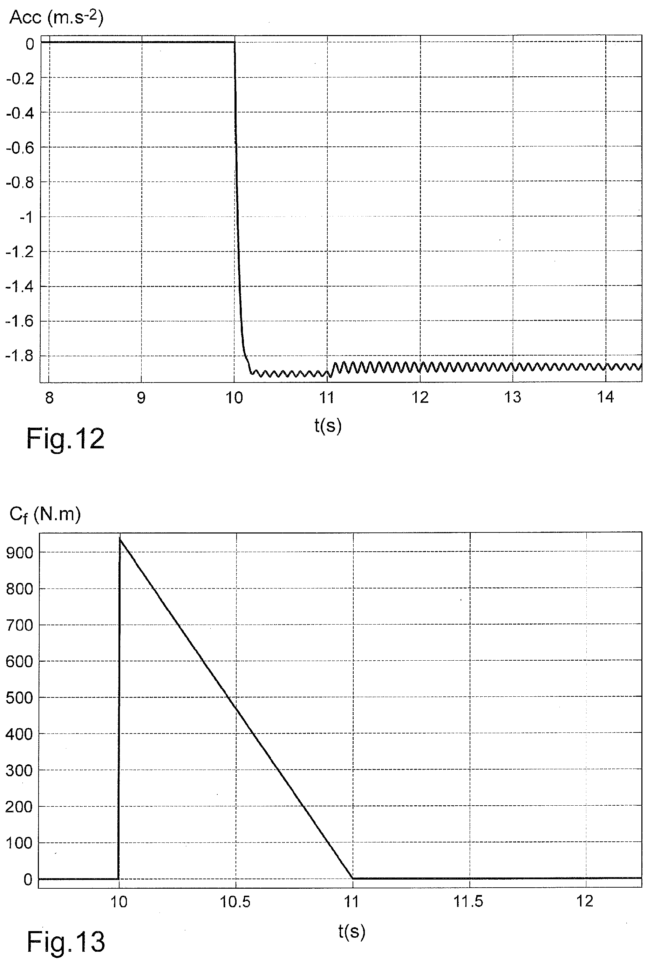

Sur les figures 12 et 13, on a illustré les résultats obtenus avec un tel filtre lorsque le conducteur appuie subitement sur le frein et le maintient appuyé.

Sur la figure 12, on a représenté les variations de l'accélération longitudinale du véhicule automobile.

Par rapport à la figure 10, on observe sur cette figure 12 que les oscillations de l'accélération longitudinale du véhicule présentent une amplitude encore plus réduite, mais qu'elles sont toujours relativement mal amorties.

Sur la figure 13, on a représenté les variations du couple de consigne de pilotage Cf des freins 60, 70.

Par rapport à la figure 11, on observe que le couple de consigne Cf se réduit légèrement moins rapidement. Il s'annule cependant ici aussi en environ 1 seconde, de sorte que le moteur électrique 10 assume rapidement à lui seul le freinage du véhicule automobile.

En résumé, dans cette seconde variante, les à-coups ressentis par les passagers sont plus faibles que dans la première variante, mais la quantité d'énergie récupérée par le moteur électrique 10 est moindre.

Selon une autre variante, on pourrait prévoir d'utiliser, en complément de ce filtre de limitation, un filtre curatif tel que celui représenté sur la figure 4.

Encore en variante, on pourrait prévoir de remplacer le capteur de position de la pédale de frein par un capteur d'effort, auquel cas le couple de freinage souhaité Cs serait déduit de l'effort mesuré par ce capteur.

On pourrait aussi prévoir d'implanter l'invention dans un véhicule hybride, auquel cas son fonctionnement demeurerait inchangé.

On pourrait également prévoir d'implanter l'invention dans un véhicule classique, uniquement propulsé par un moteur à combustion interne. Dans cette variante, le moyen de récupération de l'énergie générée par le freinage du véhicule serait constitué par un élément ad hoc, tel que par exemple un alternateur, un moyen pneumatique, mécanique ou un moyen hydraulique.

**Revendications**

1. Procédé de pilotage d'un véhicule automobile (1) qui est équipé de roues motrices (40), de freins (60, 70), d'un moyen de récupération (10) de l'énergie générée au freinage, et d'une chaîne de transmission de couple (20) depuis les roues motrices (40) vers le moyen de récupération (10), comprenant des étapes :

    a) d'acquisition d'une instruction de freinage (Cs) et d'au moins une caractéristique dynamique du véhicule automobile (1),
    b) de pilotage dudit moyen de récupération (10) suivant une consigne de pilotage (Cm) calculée en fonction de l'instruction de freinage (Cs) et de la caractéristique dynamique acquises à l'étape a), et
    c) de pilotage des freins (60, 70) suivant une consigne de pilotage (Cf) calculée en fonction de l'instruction de freinage (Cs) et de la caractéristique dynamique acquises à l'étape a),

    **caractérisé en ce que**, à l'étape b), la consigne de pilotage (Cm) dudit moyen de récupération (10) est calculée au moyen d'un filtre préventif (100) qui filtre ladite instruction de freinage (Cs) de manière à atténuer son amplitude autour de la fréquence de résonance de la chaîne de transmission de couple (20).

2. Procédé de pilotage selon la revendication précédente, dans lequel, à l'étape a), on acquiert la valeur d'un paramètre de sortie ($\omega_m$) dudit moyen de récupération (10), et, à l'étape b), la consigne de pilotage (Cm) de ce moyen de récupération (10) est calculée au moyen d'un filtre curatif (110) qui filtre ledit paramètre de sortie ($\omega_m$) de manière à amortir les oscillations de la chaîne de transmission de couple (20).

3. Procédé de pilotage selon la revendication précédente, dans lequel, le moyen de récupération étant constitué par un moteur électrique (10), ledit paramètre de sortie est constitué par le régime ($\omega_m$) du moteur électrique (10).

4. Procédé de pilotage selon l'une des deux revendications précédentes, dans lequel le filtre curatif (110) est de la forme $\dfrac{K s^2 (1 + \tau_1 s)}{(1 + \tau_2 s)^2 (1 + \tau_2 s)}$ .

5. Procédé de pilotage selon l'une des revendications précédentes, dans lequel le filtre préventif (100) est un filtre passe-bas.

6. Procédé de pilotage selon l'une des revendications 1 à 4, dans lequel le filtre préventif (100) est un filtre qui sature la dérivée du signal.

7. Procédé de pilotage selon l'une des revendications précédentes, dans lequel, à l'étape c), la consigne de pilotage (Cf) des freins (60, 70) est déduite de la différence entre l'instruction de freinage (Cs) et la consigne de pilotage (Cm) du moyen de récupération (10).

8. Procédé de pilotage selon l'une des revendications précédentes, dans lequel, à l'étape a), l'instruction de freinage (Cs) est déterminée en fonction de la position de la pédale de frein (80) du véhicule automobile (1) ou de l'effort appliqué sur cette pédale de frein (80) ou de la dérivée de la position de la pédale de frein (80) ou de la dérivée de l'effort appliqué sur cette pédale de frein (80).

**9.** Véhicule automobile (1) comportant :

- des roues motrices (40),
- des freins (60, 70),
- un moyen de récupération (10) de l'énergie générée au freinage du véhicule automobile (1), et
- une chaîne de transmission de couple (20) depuis les roues motrices (40) vers le moyen de récupération (10),

**caractérisé en ce qu'**il comporte une unité de pilotage programmée pour mettre en oeuvre un procédé de pilotage selon l'une des revendications précédentes.

**10.** Véhicule automobile (1) selon la revendication précédente, dans lequel ledit moyen de récupération est constitué par un moteur électrique (10).

## Patentansprüche

**1.** Verfahren zur Steuerung eines Kraftfahrzeugs (1), das mit Antriebsrädern (40), Bremsen (60, 70) einem Mittel zur Wiedergewinnung (10) der durch das Bremsen erzeugten Energie und einer Drehmomentübertragungskette (20) von den Antriebsrädern (40) zu dem Wiedergewinnungsmittel (10) ausgestattet ist, umfassend die folgenden Schritte:

a) Erhalt eines Bremsbefehls (Cs) und mindestens eines dynamischen Merkmals des Kraftfahrzeugs (1),
b) Steuerung des Wiedergewinnungsmittels (10) nach einem Steuerungssollwert (Cm), der in Abhängigkeit von dem Bremsbefehl (Cs) und dem dynamischen Merkmal, die in Schritt a) erhalten wurden, berechnet ist, und
c) Steuerung der Bremsen (60, 70) nach einem Steuerungssollwert (Cf), der in Abhängigkeit von dem Bremsbefehl (Cs) und dem dynamischen Merkmal, die in Schritt a) erhalten wurden, berechnet ist,

**dadurch gekennzeichnet, dass** in Schritt b) der Steuerungssollwert (Cm) des Wiedergewinnungsmittels (10) mit Hilfe eines Präventivfilters (100) berechnet wird, der den Bremsbefehl (Cs) filtert, um seine Amplitude um die Resonanzfrequenz der Drehmomentübertragungskette (20) zu dämpfen.

**2.** Steuerungsverfahren nach dem vorhergehenden Anspruch, bei dem in Schritt a) der Wert eines Ausgangsparameters ($\omega_m$) des Wiedergewinnungsmittels (10) erhalten wird, und in Schritt b) der Steuerungssollwert (Cm) dieses Wiedergewinnungsmittels (10) mit Hilfe eines Kurativfilters (110) berechnet wird, der den Ausgangsparameter ($\omega_m$) filtert, um die Schwingungen der Drehmomentübertragungskette (20) zu dämpfen.

**3.** Steuerungsverfahren nach dem vorhergehenden Anspruch, bei dem, wobei das Wiedergewinnungsmittel von einem Elektromotor (10) gebildet ist, der Ausgangsparameter von der Drehzahl ($\omega_m$) des Elektromotors (10) gebildet ist.

**4.** Steuerungsverfahren nach einem der zwei vorhergehenden Ansprüche, bei dem der Kurativfilter (110)

die Form $\dfrac{K\,s^2(1+\tau_1 s)}{(1+\tau_2 s)^2(1+\tau_2 s)}$ hat.

**5.** Steuerungsverfahren nach einem der vorhergehenden Ansprüche, bei dem der Präventivfilter (100) ein Tiefpassfilter ist.

**6.** Steuerungsverfahren nach einem der Ansprüche 1 bis 4, bei dem der Präventivfilter (100) ein Filter ist, der die Abweichung des Signals sättigt.

**7.** Steuerungsverfahren nach einem der vorhergehenden Ansprüche, bei dem in Schritt c) der Steuerungssollwert (Cf) der Bremsen (60, 70) von der Differenz zwischen dem Bremsbefehl (Cs) und dem Steuerungssollwert (Cm) des Wiedergewinnungsmittels (10) abgeleitet ist.

**8.** Steuerungsverfahren nach einem der vorhergehenden Ansprüche, bei dem in Schritt a) der Bremsbefehl (Cs) in Abhängigkeit von der Position des Bremspedals (80) des Kraftfahrzeugs (1) oder der an dieses Bremspedal (80) angelegten Kraft oder der Abweichung von der Position des Bremspedals (80) oder der Abweichung von der an dieses Bremspedal (80) angelegten Kraft bestimmt wird.

**9.** Kraftfahrzeug (1), umfassend:

- Antriebsräder (40),
- Bremsen (60, 70),
- ein Mittel (10) zur Wiedergewinnung der durch das Bremsen des Kraftfahrzeugs (1) erzeugten Energie, und
- eine Drehmomentübertragungskette (20) von den Antriebsrädern (40) zu dem Wiedergewinnungsmittel (10),

**dadurch gekennzeichnet, dass** es eine Steuerungseinheit umfasst, die dazu programmiert ist, ein Steuerungsverfahren nach einem der vorhergehenden Ansprüche einzusetzen.

**10.** Kraftfahrzeug (1) nach dem vorhergehenden Anspruch, bei dem das Wiedergewinnungsmittel von einem Elektromotor (10) gebildet ist.

**Claims**

1. Method for controlling a motor vehicle (1) which is equipped with driven wheels (40), brakes (60, 70), a means (10) for recovering the energy generated by braking, and a torque transmission mechanism (20) transmitting torque from the driven wheels (40) to the energy recovery means (10), comprising the steps of:

   a) acquiring a braking instruction (Cs) and at least one dynamic characteristic of the motor vehicle (1),
   b) controlling said recovery means (10) according to a control setpoint (Cm) calculated as a function of the braking instruction (Cs) and of the dynamic characteristic acquired in step a), and
   c) controlling the brakes (60, 70) according to a control setpoint (Cf) calculated as a function of the braking instruction (Cs) and of the dynamic characteristic acquired in step a),

   **characterized in that**, in step b), the control setpoint (Cm) of said recovery means (10) is calculated by means of a preventive filter (100) which filters said braking instruction (Cs) in such a way as to attenuate the amplitude thereof around the resonant frequency of the torque transmission mechanism (20).

2. Control method according to the preceding claim, wherein, in step a), the value of an output parameter ($\omega_m$) of said recovery means (10) is acquired, and, in step b), the control setpoint (Cm) of this recovery means (10) is calculated by means of a corrective filter (110) which filters said output parameter ($\omega_m$) in such a way as to damp out the oscillations of the torque transmission mechanism (20).

3. Control method according to the preceding claim, wherein, the recovery means being an electric motor (10), said output parameter is the operating speed ($\omega_m$) of the electric motor (10).

4. Control method according to either of the two preceding claims, wherein the corrective filter (110)
   takes the form $\dfrac{Ks^2(1+\tau_1 s)}{(1+\tau_2 s)^2(1+\tau_2 s)}$ .

5. Control method according to any one of the preceding claims, wherein the preventive filter (100) is a low-pass filter.

6. Control method according to any one of claims 1 to 4, wherein the preventive filter (100) is a filter which saturates the derivative of the signal.

7. Control method according to any one of the preceding claims, wherein, in step c), the control setpoint (Cf) of the brakes (60, 70) is deduced from the difference between the braking instruction (Cs) and the control setpoint (Cm) of the recovery means (10).

8. Control method according to any of the preceding claims, wherein, in step a), the braking instruction (Cs) is determined as a function of the position of the brake pedal (80) of the motor vehicle (1) or of the force applied to this brake pedal (80) or of the derivative of the position of the brake pedal (80) or of the derivative of the force applied to this brake pedal (80).

9. Motor vehicle (1) including:

   - driven wheels (40),
   - brakes (60, 70),
   - a means (10) for recovering the energy generated by the braking of the motor vehicle (1), and
   - a torque transmission mechanism (20) transmitting torque from the driven wheels (40) to the energy recovery means (10),

   **characterized in that** it includes a control unit programmed to execute a control method according to any one of the preceding claims.

10. Motor vehicle (1) according to the preceding claim, wherein said recovery means is an electric motor (10).

Fig.1

Fig.2

Fig.3

110

Fig.4

Acc (m.s⁻²)

Fig.5

Acc (m.s⁻²)

Fig.6

t(s)

C_f (N.m)

Fig.7

t(s)

Fig.8

Fig.9

Acc (m.s⁻²)

Fig.10

C_f (N.m)

Fig.11

13

EP 2 668 059 B1

Acc (m.s⁻²)

Fig.12

C_f (N.m)

Fig.13

14

**EP 2 668 059 B1**

## RÉFÉRENCES CITÉES DANS LA DESCRIPTION

**Documents brevets cités dans la description**

- FR 2926771